# EUROPÄISCHE PATENTSCHRIFT

(11) **EP 2 633 913 B1**
(45) Veröffentlichungstag und Bekanntmachung des Hinweises auf die Patenterteilung: **08.05.2019**
(21) Anmeldenummer: 12001394.1
(22) Anmeldetag: 01.03.2012
(51) Int. Cl.: B01L 3/02, G01N 35/10

(54) **Pipettiervorrichtung und Mehrkanal-Pippettiervorrichtung**
Pipette device and multi-channel pipette device
Dispositif de pipetage et dispositif de pipetage multi-canal

(43) Veröffentlichungstag der Anmeldung: 04.09.2013
(73) Patentinhaber: Eppendorf AG, 22339 Hamburg (DE)
(72) Erfinder: Link, Holger, 22339 Hamburg (DE)
(74) Vertreter: Ricker, Mathias

(56) Entgegenhaltungen:
- US-A1- 2002 001 545
- US-A1- 2006 123 929
- US-B1- 6 270 726
- US-B1- 6 324 925

## Beschreibung

Die Erfindung bezieht sich auf eine Pipettiervorrichtung und eine Mehrkanal-Pipettiervorrichtung.

Solche Pipettiervorrichtungen werden üblicherweise in medizinischen, biologischen, biochemischen, chemischen und anderen Laboratorien verwendet. Sie dienen im Labor zum Transport und Übertragen von fluiden Proben mit kleinen Volumina, insbesondere zur präzisen Dosierung der Proben. Bei Pipettiervorrichtungen werden z.B. flüssige Proben mittels Unterdruck in Pipettenbehälter, z.B. Pipettenspitzen, eingesaugt, dort gelagert, und am Zielort wieder aus diesen abgegeben.

Zu den Pipettiervorrichtungen gehören z.B. handgehaltene Pipetten und Dispenser. Unter einer Pipette wird ein Gerät verstanden, bei dem mittels einer Bewegungseinrichtung, die dem Gerät zugeordnet ist und die insbesondere einen Kolben aufweisen kann, eine zu pipettierende Probe in einen mit der Pipette verbundenen Pipettierbehälter eingesaugt werden kann. Bei einer Luftpolsterpipette ist der Kolben dem Gerät zugeordnet und zwischen der zu pipettierenden Probe und dem Kolbenende befindet sich ein Luftpolster, das beim Aufnehmen der Probe in den Pipettierbehälter ausgedehnt wird, wodurch die Probe mittels Unterdruck in den Pipettierbehälter gesaugt wird. Unter einem Dispenser wird ein Gerät verstanden, bei dem mittels einer Bewegungseinrichtung, die insbesondere einen Kolben aufweisen kann, ein zu pipettierendes Volumen in einen mit dem Dispenser verbundenen Pipettierbehälter eingesaugt werden kann, wobei die Bewegungseinrichtung zumindest teilweise dem Pipettierbehälter zugeordnet ist, indem z.B. der Kolben im Pipettierbehälter angeordnet ist. Beim Dispenser befindet sich das Kolbenende sehr nahe an der zu pipettierenden Probe oder in Kontakt mit dieser, weshalb man den Dispenser auch als Direktverdrängerpipette bezeichnet.

Bei einer Pipettiervorrichtung kann die durch eine einzelne Betätigung abgegebene Probenmenge der in das Gerät aufgesaugten Probenmenge entsprechen. Es kann aber auch vorgesehen sein, dass eine mehreren Abgabemengen entsprechende aufgenommene Probenmenge schrittweise wieder abgegeben wird. Zudem wird zwischen Einkanal-Pipettiervorrichtungen und Mehrkanal- Pipettiervorrichtungen unterschieden, wobei Einkanal-Pipettiervorrichtungen nur einen einzigen Abgabe-/Aufnahmekanal enthalten und Mehrkanal-Pipettiervorrichtungen mehrere Abgabe-/Aufnahmekanäle enthalten, die insbesondere das parallele Abgeben oder Aufnehmen mehrerer Proben erlauben. Pipettiervorrichtungen können insbesondere handbetrieben sein, d.h. ein durch den Benutzer erzeugtes Antreiben der Bewegungseinrichtung implizieren, und/oder können insbesondere elektronisch betrieben sein.

Beispiele für handgehaltenen Pipetten sind die Eppendorf Reference® und die Eppendorf Research® der Eppendorf AG, Hamburg, Deutschland; ein Beispiel für einen handgehaltenen Dispenser ist die Multiplette® plus der Eppendorf AG; ein Beispiel für eine handgehaltene, elektronische Pipette ist die Eppendorf Xplorer® der Eppendorf AG; Beispiele für handgehaltene, elektronische Dispenser sind die Multipette stream® und Xstream® der Eppendorf AG.

Pipettenspitzen werden üblicherweise in Behältern aufbewahrt, wo sie in eine Lochplatte gesteckt werden und somit die Spitze frei hängt und nicht kontaminiert werden kann. Das Aufstecken der Pipettenspitzen erfolgt üblicherweise, indem man den gewöhnlich als Arbeitskonus ausgeführten Verbindungsabschnitt der Pipette, an dem die Pipettenspitze insbesondere aufgesteckt wird, auf die Pipettenspitze steckt. Hierbei wird vorzugsweise die Pipettenspitze nur so weit aufgesteckt, dass sie sicher auf dem Arbeitskonus sitzt. Gleichzeitig ist bevorzugt, dass die Spitze nicht mit zu großer Kraft aufgesteckt wird, um Beschädigungen zu vermeiden und die zum Aufstecken oder Abwerfen erforderliche Aufsteckkraft oder Abwurfkraft der Pipettenspitze nicht unnötig zu erhöhen. Wenn die Pipettenspitze gewechselt werden muss, wird durch den Bediener bzw. die Bedienerin die meist an der Pipette vorgesehene Abwurfeinrichtung betätigt und die Pipettenspitze abgeworfen. Hierbei muss durch die Abwurfeinrichtung die Aufsteckkraft überwunden werden. Da die Abwurfeinrichtungen meist die Betätigungskraft des Benutzers übertragen, gibt es entsprechende Getriebe, um die Kraft möglichst effektiv, bzw. potenziert auf die Pipettenspitze zu übertragen, wie z.B. in der DE 198 45 950 C1 beschrieben ist.

Um die Aufsteckkräfte zu reduzieren und dem Benutzer die Sicherheit zu geben, dass die Pipettenspitze sicher auf dem Arbeitskonus sitzt, gibt es entsprechende Einrichtungen, um die Aufsteckkräfte zu begrenzen. In der DE 10 2004 003 433 B4 ist eine solche Einrichtung beschrieben. Die Arbeitskonen sind hierbei im Gehäuse verfedert gelagert. Beim Aufstecken der Pipette wird beim Überschreiten einer definierten Kraftschwelle der Arbeitskonus zum Gehäuse oder in das Gehäuse bewegt. Der Arbeitskonus weicht dann der Aufsteckkraft aus und führt eine Ausweichbewegung durch. Die Kraftschwelle ist so gewählt, dass die Pipettenspitze sicher auf dem Arbeitskonus fixiert ist. Gleichzeitig wird durch das Nachgeben bzw. Ausweichen des Arbeitskonus die Aufsteckkraft der Pipettenspitze limitiert, was sich positiv auf das Abwurfverhalten der Pipettenspitze auswirkt. Eine Pipettiervorrichtung, die in einem solchen gefederten Betriebszustand betrieben wird, erfordert geringere Abwurfkräfte und ist deshalb insbesondere ergonomisch.

Um das Abwerfen von Pipettenspitzen von einer Pipettiervorrichtung zu erleichtern beschreibt die US 2002/0001545 A1 einen Mechanismus zum Speichern von mechanische Energie, wenn die Pipettenspitze auf einen Arbeitskonus der Pipettiervorrichtung aufgesteckt wird. Zudem kann der Mechanismus die Kraft, mit der die Pipettenspitze auf den Arbeitskonus aufgesteckt wird, begrenzen sowie die gespeicherte Energie nutzen, um das Abwerfen der Pipettenspitze zu erleichtern.

Die US 6,324,925 B1 beschreibt eine Pipettiervorrichtung und ein Verfahren zum Entfernen einer Pipettenspitze von einer Pipettiervorrichtung. Dabei wird die Pipettenspitze abgeworfen wird, indem indem eine Abwurfeinrichtung, die in einem Luftraum montiert ist, der gemeinsam durch den Probenraum der austauschbaren Spitze und den zylindrischen Raum des Endteils der Pipettiervorrichtung gebildet wird, wobei die Abwurfeinrichtung zwischen ihren beiden Extrempositionen, nämlich einer inneren Ausgangsstellung (6b) und einer äußeren Entfernungsstellung beweglich ist, dazu gebracht wird, sich in Zusammenwirkung mit einer inneren Oberfläche der auf das Endteil montierten austauschbaren Pipettenspitze zu bewegen, wobei die Bewegung der Abwurfeinrichtung in ihre Entfernungsstellung das Lösen der austauschbaren Pipettenspitze von dem Endteil (1) bewirkt.

In manchen Situationen oder abhängig vom individuellen Benutzer ist die an der Pipettiervorrichtung mittels Federeinrichtung definierte Aufsteckkraft aber nicht geeignet, um die Verbindung zwischen Pipettiervorrichtung und Pipettierbehälter in der gewünschten Weise herzustellen.

Die US 2006/0123929 A1 beschreibt eine Mehrkanal-Pipettiervorrichtung, bei welcher die Saugrohre elastisch angeordnet sind, so dass Einweg-Pipettenspitzen in ähnlicher Weise und unabhängig von der Form und den elastischen Eigenschaften des Behälters für die Pipettenspitze an jedem der Saugrohre aufgesteckt werden können.

Es ist Aufgabe der Erfindung eine Pipettiervorrichtung und eine Mehrkanal-Pipettiervorrichtung bereitzustellen, die flexibler zu verwenden ist und die insbesondere eine größere Flexibilität hinsichtlich der Aufsteckkraft zwischen Pipettierbehälter (z.B. einer Pipettenspitze) und Pipettiervorrichtung bietet.

Die Erfindung löst diese Aufgabe durch die Pipettiervorrichtung nach Anspruch 1 und die Mehrkanal-Pipettiervorrichtung nach Anspruch 15. Bevorzugte Ausgestaltungen sind insbesondere Gegenstände der Unteransprüche.

Die Hilfseinrichtung der erfindungsgemäßen Pipettiervorrichtung bietet dem Benutzer den Vorteil, dass dieser nicht nur auf den ersten Betriebszustand der Pipettiervorrichtung zurückgreifen kann, in dem mittels der Federeinrichtung insbesondere eine bestimmte Aufsteckkraft geräteseitig definiert ist, sondern der Benutzer wahlweise zumindest einen zweiten Betriebszustand herbeiführen kann, in dem die Hilfseinrichtung auf die axiale Beweglichkeit des mindestens einen Verbindungsabschnitts einwirkt, insbesondere der axialen Beweglichkeit des mindestens einen Verbindungsabschnitts entgegenwirkt und insbesondere zusätzlich zur Wirkung der Federeinrichtung entgegenwirkt. Die erfindungsgemäße Pipettiervorrichtung ist deshalb flexibler benutzbar.

Die Pipettiervorrichtung ist vorzugsweise so ausgestaltet, dass der mindestens eine Verbindungsabschnitt und/oder einer dieser Verbindungsabschnitte und/oder jeder dieser Verbindungsabschnitte unabhängig von den jeweils anderen Verbindungsabschnitten im ersten Betriebszustand eine axiale Ausweichbewegung zwischen einer Startposition und einer ersten Endposition durchführen kann. Die erste Endposition ist vorzugsweise durch einen Anschlag am Grundkörper und/oder an einer Abwurfeinrichtung des Grundkörpers definiert, an dem ein mit dem Verbindungsabschnitt verbundener Pipettierbehälter am Ende der Ausweichbewegung anschlägt. Auf diese Weise wird im ersten Betriebszustand vorzugsweise die Aufsteckkraft eines Pipettierbehälters auf einen Verbindungsabschnitt durch die Federeinrichtung definiert. Der erste Betriebszustand ist vorzugsweise derart, dass die Aufsteckkraft durch die Gestaltung der Pipettiervorrichtung, insbesondere der Federeinrichtung definiert ist und insbesondere nicht durch den Benutzer beeinflussbar ist. Der Betrieb von Pipettiervorrichtungen im ersten Betriebszustand ist funktionell und ergonomisch, da die Aufsteckkraft so vordefiniert ist, dass sie nicht höher ist als für ein dichtes Anliegen der Pipettierbehälter am Verbindungsabschnitt erforderlich. Pipettiervorrichtungen wie in DE 10 2004 003 433 B4 beschrieben, lassen sich nur im ersten Betriebszustand betreiben, aber nicht wahlweise im zweiten Betriebszustand betreiben.

Die Pipettiereinrichtung ist ferner vorzugsweise so ausgestaltet, dass der mindestens eine Verbindungsabschnitt und/oder einer dieser Verbindungsabschnitte und/oder jeder dieser Verbindungsabschnitte unabhängig von den jeweils anderen Verbindungsabschnitten im zweiten Betriebszustand im wesentlichen keine axiale Ausweichbewegung oder eine axiale Ausweichbewegung zwischen einer Startposition und einer zweiten Endposition durchführen kann, wobei diese zweite Endposition von der ersten Endposition verschieden ist. Insbesondere schlägt im zweiten Betriebszustand ein mit dem Verbindungsabschnitt verbundener Pipettierbehälter vorzugsweise nicht an einem Anschlag des Grundkörpers und/oder einer Abwurfeinrichtung des Grundkörpers an. Auf diese Weise wird im zweiten Betriebszustand vorzugsweise die Aufsteckkraft eines Pipettierbehälters auf einen Verbindungsabschnitt durch die Hilfseinrichtung und/oder den Benutzer definiert. Der zweite Betriebszustand ist vorzugsweise derart, dass die Aufsteckkraft durch den Benutzer beeinflussbar ist und insbesondere nicht durch die Gestaltung der Pipettiervorrichtung definiert ist.

Die Hilfseinrichtung weist vorzugsweise mindestens ein Hilfselement auf, das beweglich an der Pipettiervorrichtung angeordnet ist, so dass es vom Benutzer zumindest zwischen einer ersten Position und einer zweiten Position an der Pipettiervorrichtung durch eine Hilfsbewegung bewegbar ist, wobei in der ersten Position sich die Pipettiervorrichtung im ersten Betriebszustand befindet, und wobei in der zweiten Position sich die Pipettiervorrichtung im zweiten Betriebszustand befindet. Der Benutzer veranlasst selber die Hilfsbewegung und entscheidet so, ob er die Pipettiervorrichtung im ersten Betriebszustand oder im zweiten Betriebszustand betreiben möchte. Eine solche Konfiguration lässt sich einfach und Platz sparend umsetzen.

Vorzugsweise ist das mindestens eine Hilfselement im ersten Betriebszustand der Pipettiervorrichtung so angeordnet, dass sich der mindestens eine Verbindungsabschnitt an der Federeinrichtung abstützt.

Die Hilfseinrichtung kann so ausgestaltet sein, dass das mindestens eine Hilfselement vom Benutzer manuell angetrieben wird, um die Hilfsbewegung durchzuführen. Eine solche Konfiguration lässt sich einfach und platzsparend umsetzen. Die Hilfseinrichtung kann auch so ausgestaltet sein, dass das mindestens eine Hilfselement während der Hilfsbewegung von einer Antriebseinrichtung angetrieben wird, die bei der Pipettiervorrichtung vorgesehen sein kann. Vorzugsweise weist die Pipettiervorrichtung oder die Mehrkanal-Pipettiervorrichtung eine Antriebseinrichtung auf, um die Hilfsbewegung durchzuführen, insbesondere elektrisch zu starten und/oder elektrisch anzutreiben. Diese Antriebseinrichtung ist vorzugsweise elektrisch betrieben. Sie kann einen Aktuator und/oder einen Elektromotor aufweisen. Sie kann insbesondere ein piezoelektrisches Element, einen Synchronmotor oder einen Schrittmotor aufweisen. Sie kann ferner eine Getriebeeinrichtung aufweisen, mit der insbesondere die Bewegung der Antriebseinrichtung in diese Hilfsbewegung übertragen wird. Vorzugsweise ist eine elektrische Steuereinrichtung der Pipettiervorrichtung oder der Mehrkanal-Pipettiervorrichtung vorgesehen, durch die die Antriebseinrichtung automatisch gesteuert wird. Dabei ist insbesondere vorgesehen, dass der Benutzer diese elektrisch angetriebene Hilfsbewegung durch Betätigen eines Betätigungselementes steuern kann, insbesondere starten kann oder rückgängig machen kann.

Vorzugsweise ist die Hilfseinrichtung derart ausgebildet, dass die Hilfsbewegung zumindest teilweise senkrecht zur Achsrichtung gerichtet ist. Auf diese Weise kann das mindestens eine Hilfselement so angeordnet werden, dass es zumindest abschnittsweise in die zumindest teilweise oder vollständig axial gerichtete Bewegungsbahn der Ausweichsbewegung des mindestens einen Verbindungsabschnitts eingebracht werden kann. Ferner kann so erreicht werden, dass das mindestens eine Hilfselement seitlich an den mindestens einen Verbindungsabschnitt herangeführt werden kann, wodurch für die Hilfsbewegung weniger Raum in axialer Richtung an der Pipettiervorrichtung benötigt wird. Insbesondere muss das Hilfselement nicht derart axial von oben in die zweite Position gebracht werden, dass ein relativ aufwändiges Zerlegen der Pipettiervorrichtung in axial übereinander liegende Teile der Pipettiervorrichtung durch den Benutzer erforderlich wäre.

Vorzugsweise ist die Hilfsbewegung im wesentlichen senkrecht zur Achsrichtung gerichtet. Auf diese Weise ist eine einfache Konstruktion möglich, bei der das mindestens eine Hilfselement zumindest abschnittsweise in die zumindest teilweise oder vollständig axial gerichtete Bewegungsbahn der Ausweichbewegung des mindestens einen Verbindungsabschnitts eingebracht werden kann, wobei in axialer Richtung minimaler Raum benötigt wird.

Vorzugsweise ist das mindestens eine Hilfselement beweglich am Grundkörper gelagert und insbesondere beweglich verbunden, und insbesondere nicht getrennt von der Pipettiervorrichtung vorgesehen. Dies entspricht der ersten bevorzugten Ausführungsform der Erfindung. Insbesondere ist das mindestens eine Hilfselement im ersten und zweiten Betriebszustand mit der Pipettiervorrichtung verbunden, insbesondere in allen Betriebszuständen der Pipettiervorrichtung mit dieser verbunden.

Dies ermöglicht eine einfache und ergonomische Bedienbarkeit der Pipettiervorrichtung. Bei bestimmungsgemäßem Betrieb ist dann nicht vorgesehen, dass das an der Pipettiervorrichtung gelagerte Hilfselement von dieser entfernt wird. Es ist aber möglich, dass die Pipettiervorrichtung zu Wartungszwecken, wenn kein Betrieb vorgesehen ist, derart zerlegt werden kann, dass auch das Hilfselement entfernt wird oder entfernbar ist.

Vorzugsweise weist die Hilfseinrichtung eine Führungseinrichtung auf, mit der die Hilfsbewegung des mindestens einen Hilfselementes an der Pipettiervorrichtung geführt wird. Die Führungseinrichtung oder das mindestens eine Hilfselement kann mindestens ein Führungselement, insbesondere ein Schienenelement, oder mindestens ein Führungshilfselement, insbesondere ein Schienengleitelement, aufweisen. Das Führungselement kann an der Pipettiervorrichtung oder am Hilfselement angeordnet sein. Komplementär dazu kann das Führungshilfselement am Hilfselement oder an der Pipettiervorrichtung angeordnet sein.

Die Hilfseinrichtung kann ein Bedienelement aufweisen, durch das die Hilfseinrichtung von Benutzer bedienbar ist, insbesondere mittels einer Bedienungsbewegung des Benutzers. Das Bedienelement kann ein Schiebeelement, ein Drehelement oder ein Auslenkelement sein, durch das die Hilfsbewegung bewirkbar ist, in dem das Bedienelement geschoben wird, und/oder gedreht oder geschwenkt wird, und/oder ausgelenkt, insbesondere gedrückt oder gezogen wird. Vorzugsweise weist die Hilfseinrichtung eine Fixiereinrichtung, insbesondere eine Rasteinrichtung auf, durch die das mindestens eine Hilfselement zumindest in der ersten Position und/oder zumindest der zweiten Position fixiert wird, insbesondere einrastet. Die Rasteinrichtung kann derart gestaltet sein, dass das mindestens eine Hilfselement in der jeweiligen Rastposition gegen unbeabsichtigtes, z.B. durch Stöße oder Vibrationen verursachtes Verlagern gesichert ist. Möglich ist auch, dass das Verrasten dazu dient, dem Benutzer die Positionierung zu bestätigen, insbesondere wenn eine Positionssicherung bereits auf andere Weise erzielt wird.

Die Hilfseinrichtung kann so ausgebildet sein, dass diese Bedienungsbewegung unmittelbar auf das mindestens eine Hilfselement übertragen wird, indem zum Beispiel das Bedienelement fest, d.h. insbesondere nicht zerstörungsfrei lösbar, mit dem mindestens einem Hilfselement verbunden ist.

Die Hilfseinrichtung kann auch so ausgebildet sein, dass die Bedienungsbewegung mittelbar, also indirekt auf das mindestens eine Hilfselement übertragen wird, indem zum Beispiel das Bedienelement über eine Kopplungseinrichtung mit dem mindestens einem Hilfselement verbunden ist. Die Kopplungseinrichtung kann eine Getriebeeinrichtung aufweisen, mittels der die Bedienungsbewegung des Bedienelements auf das mindestens eine Hilfselement übertragen wird, um die Hilfsbewegung zu bewirken.

Die Hilfsbewegung ist vorzugsweise eine Translationsbewegung. Auf diese Weise kann insbesondere die Hilfseinrichtung einfach als Verriegelungseinrichtung ausgebildet werden, bei der das Hilfselement durch eine Translationsbewegung in die vorzugsweise axiale Bewegungsbahn der Ausweichsbewegung des mindestens einen Verbindungsabschnitts eingreift. Die Hilfsbewegung kann aber auch teilweise oder vollständig eine Rotationsbewegung sein. Es kann beispielsweise vorgesehen sein, dass das mindestens eine Hilfselement zwischen der ersten Position und der zweiten Position geschwenkt wird. Auf diese Weise kann insbesondere die Hilfseinrichtung einfach als Verriegelungseinrichtung ausgebildet werden, bei der das Hilfselement durch eine Rotationsbewegung in die Bewegungsbahn des mindestens einen Verbindungsabschnitts eingreift. Die Hilfsbewegung kann auch eine gemischt translationale und rotierende Bewegung sein, z.B. helikal verlaufend.

Vorzugsweise ist die Hilfseinrichtung als Verriegelungseinrichtung ausgebildet, mittels der die Ausweichbewegung im zweiten Betriebszustand im wesentlichen vollständig blockiert wird. Dabei ist möglich, dass im zweiten Betriebszustand ein geringer Bewegungsspielraum in axialer Richtung des Verbindungsabschnitts am Grundkörper besteht. Vorzugsweise ist die Hilfseinrichtung derart ausgebildet, dass im zweiten Betriebszustand im wesentlichen kein Bewegungsspielraum in axialer Richtung des Verbindungsabschnitts am Grundkörper besteht.

Vorzugsweise ist das mindestens eine Hilfselement ein Riegelelement, mit dem der mindestens eine Verbindungsabschnitt im zweiten Betriebszustand verriegelt ist und den ersten Betriebszustand unverriegelt ist. Es ist möglich, dass die Hilfseinrichtung derart ausgestaltet ist, dass im zweiten Betriebszustand wahlweise nur ein Anteil einer Mehrzahl von Verbindungsabschnitten in seiner axialen Beweglichkeit beeinflusst wird, insbesondere verriegelt wird. Im zweiten Betriebszustand ist das mindestens eine Riegelelement vorzugsweise derart am Grundkörper gelagert, dass es zumindest in positiver Achsrichtung gegenüber dem Grundkörper nicht beweglich ist und insbesondere als Widerlager für die Aufsteckkraft dienen kann. Das mindestens eine Riegelelement kann aber in negative Achsrichtung beweglich gegenüber dem Grundkörper angeordnet sein, zum Beispiel wenn es an einem Abwurfelement der Abwurfeinrichtung angebracht ist.

Das Riegelelement ist vorzugsweise ein Leistenelement, das sich insbesondere entlang einer geraden Richtung erstreckt, und insbesondere so an der Pipettiervorrichtung angeordnet ist, dass diese Richtung in einem Winkel ungleich 0° zur Achsrichtung verläuft, insbesondere im wesentlichen senkrecht zur Achsrichtung verläuft. Das Leistenelement ist vorzugsweise verschiebbar an der Pipettiervorrichtung angeordnet.

Besonders bevorzugt ist die des Einrichtung als Verriegelungseinrichtung ausgebildet. Dies erlaubt eine besonders einfache Konstruktion der über die Vorrichtung. Vorzugsweise weist der mindestens eine Verbindungsabschnitt mindestens einen ersten Eingriffsabschnitt auf und das Riegelelement mindestens einen zweiten Eingriffsabschnitt auf, wobei im ersten Betriebszustands der mindestens eine erste Eingriffsabschnitt und der mindestens eine zweite Eingriffsabschnitt nicht ineinander eingreifen und im zweiten Betriebszustands der mindestens eine erste Eingriffsabschnitt und der mindestens eine zweite Eingriffsabschnitt ineinander eingreifen und in einer Verriegelungsposition angeordnet sind. In der Verriegelungsposition ist der mindestens eine Verbindungsabschnitt im wesentlichen axial unbeweglich am Grundkörper angeordnet.

Vorzugsweise ist der mindestens eine erste Eingriffsabschnitt ein Vertiefungsabschnitt des Verbindungsabschnitts und der mindestens eine zweite Eingriffsabschnitt ein Vorsprungsabschnitt des Riegelelementes. Der Vorsprungsabschnitt ist vorzugsweise senkrecht zur Achsrichtung angeordnet.

Vorzugsweise weist das Leistenelement eine Mehrzahl N von Eingriffsabschnitten, insbesondere Vorsprungsabschnitten auf, wobei vorzugsweise 17 > N > 1, und vorzugsweise N ausgewählt aus der Gruppe der Zahlen {4, 8, 12, 16, 24, 32}. Vorzugsweise weist das Leistenelement mindestens eine Aussparung und vorzugsweise eine Mehrzahl N1 von Aussparungen auf. Die mindestens eine Aussparung ist vorzugsweise derart gestaltet, dass der mindestens eine Verbindungsabschnitt axial beweglich ist, wenn er vorzugsweise im ersten Betriebszustand zumindest teilweise in der mindestens einen Aussparung angeordnet ist. Vorzugsweise weist diese mindestens eine Aussparung des Leistenelementes einen kreisförmigen oder kreisabschnitt-förmigen Umriss auf.

Diese Aussparung kann auch so ausgebildet sein, dass ein erster Aussparungsbereich einen kreisförmigen oder kreisabschnitt-förmigen Umriss mit einem ersten Radius r1 aufweist ein zweiter Aussparungsbereich einen kreisförmigen oder kreisabschnittförmigen Umriss mit einem zweiten Radius r2 aufweist. Der erste Aussparungsbereich und der zweite Aussparungsbereich bilden vorzugsweise eine zusammenhängende Aussparung des Leistenelements, wobei im ersten Betriebszustand ein Verbindungsabschnitt im ersten Aussparungsbereich angeordnet ist und im zweiten Betriebszustand ein Verbindungsabschnitt zumindest teilweise im zweiten Aussparungsbereich angeordnet ist, wobei der Verbindungsabschnitt im zweiten Aussparungsbereich an einem Randabschnitt des zweiten Aussparungsbereichs anliegt oder eingreift. Ein Eingriffsabschnitt des Leistenelementes wird vorzugsweise derart gebildet, dass ein innerer Randabschnitt einer Aussparung als Eingriffsabschnitt, insbesondere Vorsprungsabschnitt ausgebildet ist.

Vorzugsweise ist der mindestens eine Verbindungsabschnitt konusartig ausgebildet, wobei er sich in Richtung des Grundkörpers vorzugsweise verbreitert, gemessen in Richtung senkrecht zur Achsrichtung. Der Verbindungsabschnitt ist vorzugsweise derart ausgebildet, dass ein komplementärer Verbindungsabschnitt eines Pipettierbehälters auf den Verbindungsabschnitt aufsteckbar ist und durch Klemmung dort fixierbar ist.

Das mindestens eine Hilfselement kann als Distanzelement ausgebildet sein, das die Beweglichkeit von mindestens einem Verbindungsabschnitt im wesentlichen vollständig blockiert, oder einschränkt, oder hemmt, indem sich der mindestens eine Verbindungsabschnitt im zweiten Betriebszustand am Distanzelement abstützt und insbesondere nicht an der Federeinrichtung abstützt. Das Distanzelement ist im zweiten Betriebszustand vorzugsweise so am Grundkörper angeordnet, dass es am Grundkörper anschlägt oder aufliegt.

Vorzugsweise ist die Hilfseinrichtung so ausgebildet, dass im zweiten Betriebszustand die Kraft F zum Auslenken des Verbindungsabschnitts aus seiner Startposition im zweiten Betriebszustand größer ist als im ersten Betriebszustand. Im zweiten Betriebszustand wirkt die Hilfseinrichtung durch eine Wechselwirkung auf die axiale Beweglichkeit des mindestens einen Verbindungsabschnitts ein. Vorzugsweise weist der mindestens eine Verbindungsabschnitt mindestens einen ersten Wechselwirkungsabschnitt auf und das mindestens eine Hilfselement, insbesondere Riegelelement, mindestens einen zweiten Wechselwirkungsabschnitt auf, wobei im ersten Betriebszustands der mindestens eine erste Wechselwirkungsabschnitt und der mindestens eine zweite Wechselwirkungsabschnitt nicht miteinander wechselwirken und im zweiten Betriebszustands der mindestens eine erste Wechselwirkungsabschnitt und der mindestens eine zweite Wechselwirkungsabschnitt miteinander wechselwirken, und so auf die Ausweichbewegung einwirken, insbesondere dieser entgegenwirken, so dass insbesondere die Kraft F zum Auslenken des Verbindungsabschnitts aus seiner Startposition im zweiten Betriebszustand größer ist als im ersten Betriebszustand. Insbesondere kann die Hilfseinrichtung eine zweite Federeinrichtung aufweisen, die mindestens ein Federelement aufweisen kann. Dieses mindestens eine Federelement kann eine im wesentlichen lineare Kraft-Weg-Charakteristik aufweisen, oder kann zumindest abschnittsweise eine nicht-lineare Kraft-Weg-Charakteristik aufweisen. Die Ausweichbewegung bewegt den mindestens einen Verbindungsabschnitt von einer Startposition in eine Endposition, wobei der Endposition der mindestens eine Verbindungsabschnitt näher am Grundkörper angeordnet ist als in seiner Startposition.

Die Wechselwirkung kann so sein, dass die axiale Beweglichkeit des mindestens einen Verbindungsabschnitts im zweiten Betriebszustand vollständig blockiert wird, also verriegelt wird, räumlich eingeschränkt wird, oder gehemmt wird, oder insbesondere so eingeschränkt wird, dass die Kraft F zum Auslenken des Verbindungsabschnitts aus seiner Startposition im zweiten Betriebszustand anders ist, vorzugsweise größer ist, als im ersten Betriebszustand. Es kann vorgesehen sein, dass eine vorbestimmte Distanz d der Ausweichbewegung, insbesondere die Distanz zwischen Start- und Endposition, des mindestens einen Verbindungsabschnitts aus seiner Startposition im zweiten Betriebszustand durch eine Kraft F2 überwindbar ist, die größer ist als die Kraft F1 im ersten Betriebszustand, wobei insbesondere F2 > f * F1, und f ein Faktor mit vorzugsweise 1,5 < f < 20.

Vorzugsweise ist die Hilfseinrichtung so ausgebildet, dass die Kraft F einstellbar ist, insbesondere vom Benutzer einstellbar ist. Dazu kann die Hilfseinrichtung eine einstellbare Federeinrichtung aufweisen, deren Kraft-Weg-Beziehung einstellbar ist, indem z.B. eine Vorspannung eines Federelements änderbar ist. Die einstellbare Federeinrichtung ist im zweiten Betriebszustand vorzugsweise parallel zur Federeinrichtung angeordnet und wirkt insbesondere parallel und zusätzlich zu dieser Federeinrichtung. Die Pipettiervorrichtung kann eine elektrische Steuereinrichtung und/oder insbesondere eine Benutzerschnittstelleneinrichtung aufweisen, wobei vorzugsweise die Kraft F mittels der Steuereinrichtung elektrisch einstellbar ist.

Die Steuereinrichtung kann elektrische Schaltkreise aufweisen, insbesondere integrierte Schaltkreise, und/oder kann einen Mikroprozessor aufweisen und/oder eine CPU, Datenspeicher und/oder Programmspeicher. Die Steuereinrichtung kann durch einen Programmcode steuerbar sein, der insbesondere dazu ausgebildet sein kann, die Hilfsbewegung gemäß einem Steuerprogramm zu steuern.

Die Benutzerschnittstelleneinrichtung kann eine Betätigungseinrichtung sein oder eine solche aufweisen, die mindestens ein Betätigungselement aufweisen kann, z.B. einen Bedienknopf. Benutzerschnittstelleneinrichtung kann ferner ein Anzeigenelement, z.B. ein Display, aufweisen, um dem Benutzer insbesondere Informationen über den Betriebszustand und/oder über Betriebsparameter der Pipettiervorrichtung anzuzeigen.

Vorzugsweise ist die Pipettiervorrichtung als Mehrkanal-Pipettiervorrichtung ausgebildet. Dazu weist die Pipettiervorrichtung vorzugsweise eine Mehrzahl N von Verbindungsabschnitten auf, wobei vorzugsweise 17 > N > 1, und vorzugsweise N ausgewählt aus der Gruppe der Zahlen {4, 8, 12, 16, 24, 32}. Die Verbindungsabschnitte sind vorzugsweise äquidistant entlang einer geraden Linie ausgerichtet und nebeneinander angeordnet. Der Abstand ist vorzugsweise so gestaltet, dass mehrere Proben gleichzeitig aus einer oder in eine Standard-Mikrotiterplatte pipettiert werden können. Bei einer Standard-Mikrotiterplatte mit 96 Vertiefungen ("wells"; siehe ANSI/SBS 4-2004) beträgt der Abstand vorzugsweise 9 mm, bei einer 384er-Mikrotiterplatte vorzugsweise 4,5 mm. Andere Schrittweiten können z.B. je nach Anordnung der Probengefäße oder Typ des Probengefäßelementes gewählt werden.

Es ist auch möglich und vorzugsweise vorgesehen, dass die Mehrkanal-Pipettiervorrichtung eine Verstelleinrichtung zum Verstellen des Abstandes zwischen den Verbindungsabschnitten aufweist. Im Falle von N>2 ist der Abstand zwischen benachbarten Verbindungsabschnitten dabei vorzugsweise immer konstant, die Abstände werden mithin vorzugsweise gleichzeitig verstellt. Die Verstelleinrichtung kann zum stufenlosen Verstellen ausgebildet sein, oder zum Verstellen in einer vorgegebenen Anzahl von verschiedenen, diskreten Abständen. Die Verstelleinrichtung kann mechanisch, insbesondere manuell, angetrieben sein, und/oder kann elektrisch angetrieben sein. Durch die Verstelleinrichtung kann eine Mehrkanal-Pipettiervorrichtung vom Benutzer in einfacher Weise zum Pipettieren mit einem gewünschten Mehrfach-Probenbehälter, insbesondere einer Mikrotiterplatte, angepasst werden und kann insbesondere zur Verwendung mit einer Vielzahl von Mehrfach-Probenbehältern verwendet werden.

Eine Mehrkanal-Pipettiervorrichtung weist vorzugsweise eine Bewegungseinrichtung zur Bewegung einer Mehrzahl N von Kolben auf, die durch eine einzige Betätigungsbewegung bewegt werden können, entweder manuell getrieben oder mechanisch oder elektrisch getrieben.

Erfindungsgemäß wird ferner eine Mehrkanal-Pipettiervorrichtung vorgeschlagen, zum Pipettieren mindestens einer fluiden Laborprobe in mindestens einen Pipettierbehälter, aufweisend: - einen sich entlang einer Achsrichtung erstreckenden Grundkörper, - mindestens zwei Verbindungsabschnitte, mit dem mindestens zwei Pipettierbehälter durch eine zumindest teilweise axiale Verbindungsbewegung entlang der positiven Achsrichtung verbindbar sind, wobei die mindestens zwei Verbindungsabschnitte zumindest in axialer Richtung beweglich mit dem Grundkörper verbunden sind, - eine Federeinrichtung, durch die die mindestens zwei Verbindungsabschnitte zumindest in einem ersten Betriebszustand der Pipettiervorrichtung am Grundkörper gefedert abgestützt sind, so dass die mindestens zwei Verbindungsabschnitte während der Verbindungsbewegung eine gefederte Ausweichbewegung entlang der positiven Achsrichtung durchführen können, wobei an der Pipettiervorrichtung eine Hilfseinrichtung vorgesehen ist, die zumindest teilweise vom Grundkörper separierbar ausgebildet ist und dazu ausgebildet ist, der Ausweichbewegung der mindestens zwei Verbindungsabschnitte in zumindest einem zweiten Betriebszustand der Pipettiervorrichtung zusätzlich zur Wirkung der Federeinrichtung entgegenzuwirken, wobei die Pipettiervorrichtung dazu ausgebildet ist, um vom Benutzer wahlweise in den ersten Betriebszustand oder den zweiten Betriebszustand versetzt zu werden, und wobei vorzugsweise die Hilfseinrichtung im ersten Betriebszustand zumindest teilweise von der Pipettiervorrichtung separiert ist und im zweiten Betriebszustand nicht von der Pipettiervorrichtung separiert ist. Die Hilfseinrichtung kann mindestens ein Hilfselement aufweisen, dass im ersten Betriebszustand zumindest teilweise von der Pipettiervorrichtung separiert ist und im zweiten Betriebszustand nicht von der Pipettiervorrichtung separiert ist. Durch eine solche Anordnung kann insbesondere eine handelsübliche Pipettiervorrichtung nachgerüstet werden, wodurch eine Pipettiervorrichtung mit den Merkmalen der vorliegenden Erfindung erhalten werden kann.

Bei einer solchen Pipettiervorrichtung kann der zweiten Betriebszustand vom Benutzer in einfacher Weise so hergestellt werden, dass mindestens ein Hilfselement oder alle Hilfselemente der Pipettiervorrichtung so an der Pipettiervorrichtung angeordnet werden, dass sie der Ausweichbewegung der mindestens zwei Verbindungsabschnitte zusätzlich zur Wirkung der Federeinrichtung entgegenwirken, insbesondere die axiale Beweglichkeit der mindestens zwei Verbindungsabschnitte im wesentlichen vollständig blockieren.

Bevorzugte Ausgestaltungen, die vorliegend für die Pipettiervorrichtung geschrieben sind, können auch bei der Mehrkanal-Pipettiervorrichtung angewandt werden.

Das mindestens eine separate Hilfselement kann als Distanzelement ausgebildet sein, das die axiale Beweglichkeit der mindestens zwei Verbindungsabschnitte im wesentlichen vollständig blockiert oder zumindest hemmt. Das Distanzelement kann mindestens einen U-förmigen Querschnittsabschnitt aufweisen, gemessen senkrecht zur Achsrichtung, so dass es in einer zur Achsrichtung senkrechten Richtung der Hilfsbewegung leicht in die zweite Position überführbar ist.

Es kann vorgesehen sein, dass die Federeinrichtung zumindest teilweise oder vollständig vom Grundkörper entfernbar ausgebildet ist. Vorzugsweise wird mindestens ein Federelement der Federeinrichtung vom Benutzer entfernt, bevor das separate Hilfselement in die zweite Position überführt wird.

Die Pipettiervorrichtung oder die Mehrkanal-Pipettiervorrichtung sind vorzugsweise jeweils ausgestaltet: - handgehalten, also gehalten durch eine Hand des Benutzers; - als Laborautomat, wobei die (Mehrkanal-)Pipettiervorrichtung dann nicht handgehalten ist sondern von einem Halteabschnitt des Laborautomaten oder einer Transport-/Lifteinrichtung gehalten wird; - handbetrieben; - elektrisch betrieben; - als Luftpolsterpipette; - als Direktverdrängerpipette.

Vorzugsweise weist die Pipettiervorrichtung oder die Mehrkanal-Pipettiervorrichtung eine Verdrängungseinrichtung zur Gaspolsterverdrängung auf, die entlang der Achsrichtung beweglich am Grundkörper angeordnet ist. Die Verdrängungseinrichtung weist eine Bewegungseinrichtung auf, die einen oder mehrere Kolben aufweisen kann. Der mindestens eine Kolben dient dazu, um in mindestens einem Zylinderbereich der Pipettiervorrichtung oder die Mehrkanal-Pipettiervorrichtung mindestens ein Luftpolster zu expandieren (beim Ansaugen mindestens einer Probe) oder zu komprimieren (beim nicht-gravitativem Ausstoßen mindestens einer Probe).

Vorzugsweise weist die Pipettiervorrichtung oder die Mehrkanal-Pipettiervorrichtung eine Abwurfeinrichtung auf. Die Abwurfeinrichtung dient dem Lösen der mindestens einen Pipettenspitze von dem mindestens einen Verbindungsabschnitt. Sie weist vorzugsweise einen dem mindestens einen Verbindungsabschnitt oder allen Verbindungsabschnitten zugeordneten Abwerfer auf, wobei der mindestens eine Verbindungsabschnitt und der Abwerfer relativ zueinander beweglich sind, und die eine mit dem Abwerfer und/oder dem mindestens einen Verbindungsabschnitt wirkverbundene Antriebseinrichtung zum relativen Bewegen von Abwerfer und mindestens einen Verbindungsabschnitt aufweist. Zum Lösen eines Pipettierbehälters von der Pipettiervorrichtung ist eine Abwurfkraft erforderlich, die auf den Pipettierbehälter wirken muss. Vorzugsweise wird die Abwurfeinrichtung einer Pipettiervorrichtung, insbesondere der Abwerfer, manuell angetrieben, so dass die Abwurfkraft mechanisch vom Benutzer aufgebracht wird. Es ist aber auch möglich und bevorzugt, dass diese Abwurfkraft elektrisch aufgebracht wird. Vorzugsweise wird die Abwurfeinrichtung einer elektrischen Pipettiervorrichtung, insbesondere der Abwerfer, elektrisch angetrieben, insbesondere indem die Pipettiervorrichtung einen elektrischen Antrieb aufweist.

Die Federeinrichtung ist vorzugsweise so ausgebildet, dass im zweiten Betriebszustand insbesondere eine konstante vorbestimmte Aufsteckkraft ergibt, die von der Spannnung oder Vorspannnung mindestens eines Federelementes der Federeinrichtung und dem Abstand abhängt, den der mindestens eine Verbindungsabschnitt bei der Ausweichbewegung zurückliegt, bis der Pipettierbehälter an einem Anschlag des Grundkörpers anschlägt. Vorzugsweise ist vorgesehen, dass die Federeinrichtung so ausgelegt und gegebenenfalls vorgespannt ist, dass die Pipettenspitze genau dann, wenn sie mit der gewünschten Aufsteckkraft auf dem Verbindungsabschnitt sitzt, an dem Anschlag anliegt. Die Aufsteckkraft ist so festgelegt, dass die Pipettenspitze sicher auf dem Verbindungsabschnitt sitzt bzw. abdichtet. Gemäss einer Ausgestaltung ist das Federelement austauschbar und/oder ist eine Einrichtung zum Einstellen der Federvorspannung des Federelements vorhanden. Hierdurch ist eine Anpassung der Aufsteck- und Abwurfkräfte an verschieden geformte bzw. bemessene Pipettenspitzen möglich. Der Einsatzbereich der Pipettiervorrichtung wird hierdurch vergrössert. Diese Einrichtung zum Einstellen ist vorzugsweise von der Hilfseinrichtung verschieden. Die Einrichtung zum Einstellen kann die vordefinierte Aufsteckkraft variieren, mit der ein Pipettierbehälter im ersten Betriebszustand vorzugsweise auf einen Verbindungsabschnitt aufsteckbar ist. Vorzugsweise ist jeder Verbindungsabschnitt über ein gesondertes Federelement am Grundkörper abgestützt.

Vorzugsweise ist der Anschlag fest mit dem Grundkörper verbunden. Gemäss einer anderen Ausgestaltung ist der Anschlag axial bezüglich des Verbindungsabschnitts beweglich und eine fest mit dem Grundkörper verbundene Begrenzung für die Axialbewegung des Anschlages zum Grundkörper hin vorhanden. Es ist ebenso möglich und bevorzugt, dass der Anschlag an dem Abwerfer ausgebildet ist.

Vorzugsweise ist der mindestens eine Verbindungsabschnitt unmittelbar an einem Federelement der Federeinrichtung abgestützt. Die Verbindung des mindestens einen Verbindungsabschnittes mit einer fest mit dem Grundkörper verbundenen Verdrängungseinrichtung kann mittels einer flexiblen Verbindung erfolgen, z.B. mit Hilfe eines flexiblen Schlauchs oder einer teleskopierbaren Rohrverbindung. Vorzugsweise ist der mindestens eine Verbindungsabschnitt fest mit einer Verdrängungseinrichtung - z.B. mit mindestens einem Zylinder einer bezüglich des Grundkörpers axial verlagerbaren Kolben-Zylinder-Einrichtung - verbunden. Die Verdrängungseinrichtung wird dann mit dem mindestens einen Verbindungsabschnitt verlagert. Die Verlagerung der Verdrängungseinrichtung kann von der Antriebseinrichtung für die Verdrängungseinrichtung kompensiert werden. Gemäss einer Ausgestaltung ist der mindestens eine Zylinder über das Federelement am Grundkörper abgestützt, so dass der mindestens eine Verbindungsabschnitt mittelbar über den mindestens einen Zylinder abgefedert ist.

Vorzugsweise weist der Grundkörper ein Oberteil und ein Unterteil auf. Das Oberteil kann einen Griffabschnitt aufweisen. Das Oberteil und/oder das Unterteil kann eine Benutzerschnittstelleneinrichtung aufweisen, insbesondere mindestens ein Bedienelement aufweisen. Das Oberteil und/oder das Unterteil kann ein Bedienelement, insbesondere ein elektrisches Bedienelement, zur Steuerung der Hilfseinrichtung oder des Hilfselementes aufweisen. Die Hilfseinrichtung ist vorzugsweise am Unterteil angeordnet. Das Bedienelement kann am Unterteil angeordnet sein, was eine einfache Konstruktion der Hilfseinrichtung ermöglicht, oder kann am Oberteil angeordnet sein, was insbesondere eine bevorzugte Lösung für ein elektrisches Bedienelement und/oder einen elektrisch betriebene Hilfseinrichtung ist. Vorzugsweise ist dieses Bedienelement am Oberteil angeordnet, um eine flexiblere und/oder komfortablere Verwendung der Pipettiervorrichtung oder Mehrkanal-Pipettiervorrichtung zu ermöglichen.

Das Unterteil ist vorzugsweise dazu ausgebildet sein, vom Benutzer vom Oberteil entfernt und wieder hinzugefügt werden zu können, was als auswechselbares Unterteil bezeichnet wird. Das Oberteil und das Unterteil sind vorzugsweise lösbar und verbindbar, vorzugsweise über eine Bajonettverbindung in vorzugsweise axialer Richtung verbindbar. Das Unterteil weist ferner vorzugsweise die Federeinrichtung auf und/oder vorzugsweise zumindest teilweise die Abwurfeinrichtung zum Lösen des Pipettierbehälters von der Pipettiervorrichtung. Das Unterteil kann ferner eine Verdrängungseinrichtung aufweisen, die mindestens ein Kolbenelement aufweisen kann. Das Oberteil kann die mindestens eine Antriebseinrichtung zum Antreiben mindestens eines Kolbens und/oder einer Abwurfeinrichtung aufweist.

Die mindestens eine Verdrängungseinrichtung ist vorzugsweise dazu ausgebildet, ein vorbestimmtes Maximalvolumen pipettieren zu können. Dieses Maximalvolumen ist so bemessen, dass mindestens ein Typ von Pipettierbehältern, insbesondere Pipettierspitzen, bis zu derem maximalen Nennvolumen durch Pipettieren befüllbar ist. Typische Nennvolumina von handelsüblichen Pipettiespitzen sind z.B. 10 µL, 20 µL, 100 µL, 200 µL, 300 µL, 1000 µL, 1250 µL, 2500 µL, 5 mL, 10 mL (µL: Mikroliter; mL: Milliliter).

Weitere bevorzugte Ausgestaltungen der Federeinrichtung und der Pipettiervorrichtung oder der Mehrkanal-Pipettiervorrichtung, insbesondere betreffend deren Funktionalität im ersten Betriebszustand, sind in DE 10 2004 003 433 B4 beschrieben.

Weitere bevorzugte Ausgestaltungen der erfindungsgemäßen Pipettiervorrichtung und der erfindungsgemäßen Mehrkanal-Pipettiervorrichtung ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1a zeigt in einer Perspektivansicht ein erstes Ausführungsbeispiel der erfindungsgemäßen Pipettiervorrichtung, gemäß der ersten bevorzugten Ausführungsform der Erfindung.
Fig. 1b zeigt in einer Perspektivansicht ein zweites Ausführungsbeispiel der erfindungsgemäßen Mehrkanal-Pipettiervorrichtung, gemäß der ersten bevorzugten Ausführungsform der Erfindung.
Fig. 2a zeigt eine Vorderansicht der Mehrkanal-Pipettiervorrichtung aus Fig. 1b im ersten Betriebszustand.
Fig. 2b zeigt eine Vorderansicht der Mehrkanal-Pipettiervorrichtung aus Fig. 1b im zweiten Betriebszustand.
Fig. 3 zeigt eine Vorderansicht des Unterteils der Mehrkanal-Pipettiervorrichtung aus Fig. 1b, mit abgenommener Vorderwand.
Fig. 4a zeigt eine Unteransicht der Mehrkanal-Pipettiervorrichtung aus Fig. 1b im ersten Betriebszustand.
Fig. 4b zeigt eine Unteransicht der Mehrkanal-Pipettiervorrichtung aus Fig. 1b im zweiten Betriebszustand.
Fig. 5a zeigt eine Unteransicht auf das Hilfselement und einen Verbindungsabschnitt der Mehrkanal-Pipettiervorrichtung aus Fig. 1b im ersten Betriebszustand.
Fig. 5b zeigt eine Unteransicht auf das Hilfselement und einen Verbindungsabschnitt der Mehrkanal-Pipettiervorrichtung aus Fig. 1b im zweiten Betriebszustand.
Fig. 6a zeigt eine Vorderansicht des Unterteils einer Mehrkanal-Pipettiervorrichtung gemäß der zweiten bevorzugten Ausführungsform der Erfindung, mit abgenommener Vorderwand.
Fig. 6b zeigt das zur Mehrkanal-Pipettiervorrichtung der Fig. 6a trennbar ausgebildete Hilfselement.
Fig. 6c zeigt eine perspektivische Ansicht von Bestandteilen des Unterteils einer Mehrkanal-Pipettiervorrichtung gemäß Fig. 6a.

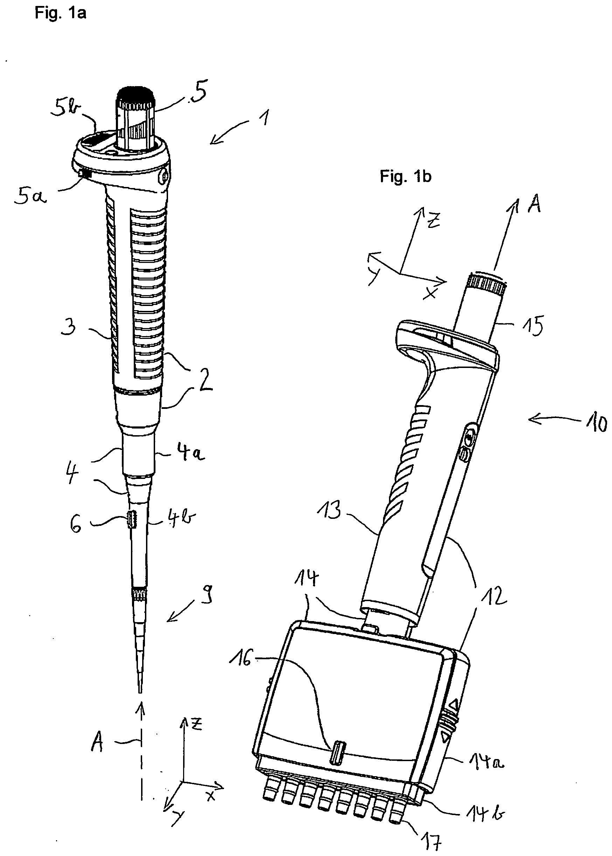

Fig. 1a zeigt die als mechanische Einkanal-Luftpolster-Pipette ausgeführte Pipettiervorrichtung 1. Ein Pipettierbehälter 9 ist luftdicht mit dem Verbindungsabschnitt (nicht sichtbar) der Pipettiervorrichtung verbunden. Die Pipettiervorrichtung weist einen Grundkörper 2 auf, der einen Oberteil 3 und ein Unterteil 4 aufweist. Das Oberteil und das Unterteil sind durch einen Verschluss (nicht gezeigt) miteinander verbindbar. Das Unterteil 4 weist einen fest am Oberteil des Grundkörpers gelagerten Basisabschnitt 4a auf. Eine Abwurfhülse 4b zum Abwerfen des Pipettierbehälters ist gefedert am Basisabschnitt 4a gelagert.

Es handelt sich um eine Einknopf-Pipette mit einem Kombi-Bedienknopf 5. Der Bedienknopf 5 hat mehrere Funktionen. Er ist um die Achsrichtung A drehbar, wodurch bei Drücken des gefederten Entriegelungsknopfes 5a eine Pipettier-Sollvolumen einstellen lässt, das dem Benutzer über die Anzeige 5b angezeigt wird. Der Entriegelungsknopf verhindert im ungedrückten Zustand, dass das eingestellte Pipettier-Sollvolumen unbeabsichtigt geändert wird. Der Bedienknopf 5 ist gefedert gelagert. Das Drücken des Bedienknopfs 5 bewirkt eine axial nach unten, nämlich in Richtung der negativen z-Achse des kartesischen Koordinatensystems entlang der, speziell negativen, Achsrichtung -A gerichtete Bewegung des Bedienknopfs 5 und einen gleichzeitigen manuellen Antrieb einer in der Pipettiervorrichtung vorgesehenen Bewegungseinrichtung (nicht sichtbar), die einen Kolben aufweist, der sich mit dem Bedienknopf 5 nach unten bewegt, bis ein erster Zwischenanschlag erreicht wird. Diese erste Bewegung entspricht dem Hub der Pipette, mit dem das im Zylinder angeordnete Pipettier-Sollvolumen verschoben wird. Durch weiteres Erhöhen der Druckkraft durch den Benutzer wird der Bedienknopf weiter nach unten bewegt, bis ein zweiter Zwischenanschlag erreicht wird und es wird so der Überhub durchgeführt, mit dem sichergestellt wird, dass eine in dem Pipettierbehälter 9 enthaltene Probe mit einem dem Pipettier-Sollvolumen entsprechenden Probenvolumen vollständig aus dem Pipettierbehälter ausgestoßen wird. Durch erneutes Erhöhen der Druckkraft durch den Benutzer wird der Bedienknopf weiter nach unten bewegt, was zur Folge hat, dass sich die Abwurfhülse 4b der Abwurfeinrichtung der Pipettiervorrichtung nach unten bewegt und die Pipettenspitze 9 aus ihrer Verbindungsposition verdrängt und nach unten abwirft. Nach dem Loslassen des gefedert gelagerten Bedienknopfs 5 bewegt sich dieser automatisch in die Ausgangsposition zurück.

Im ersten Betriebszustand in der Pipettiervorrichtung 1 ist der als Arbeitkonus gestaltete Verbindungsabschnitt (nicht gezeigt) der Pipettiervorrichtung 1 über eine Federeinrichtung (nicht gezeigt), aufweisend eine axial ausgerichtete Schraubfeder (nicht gezeigt), gefedert am Basisabschnitt 4a des Unterteils des Grundkörpers gelagert. Dabei stützt sich der Verbindungsabschnitt an der Schraubfeder ab. Im ersten Betriebszustand erfolgt das Verbinden einer Pipettenspitze mit dem Arbeitskonus wie folgt: die Pipettenspitze ist derart in einer Pipettenspitzen-Halterung gelagert, dass ihr hohlkegelförmiger Verbindungsabschnitt nach oben gerichtet ist. Der Benutzer bewegt die Pipette von oben an die Pipettenspitze heran und führt den Arbeitskonus in den Verbindungsabschnitt der Pipette ein. Während der nach unten gerichteten Bewegung der Pipette schlägt der Arbeitskonus im Verbindungsabschnitt der Pipettenspitze an, der Druck auf den gefedert gelagerten Arbeitskonus erhöht sich und der Arbeitskonus weicht diesem Druck relativ zum Grundkörper gesehen nach oben aus, bis der obere Rand der Pipettenspitze an einem festen Anschlag des Grundkörpers anschlägt. Der Anschlag ist der untere Rand der Abwurfhülse 4b. Ein weiteres Drücken des Benutzers der Pipette nach unten gegen die Pipettenspitze wird die Aufsteckkraft nicht weiter erhöhen, mit der die Pipettenspitze auf dem Arbeitskonus der Pipette aufgesteckt ist. Die Aufsteckkraft ist in diesem ersten Betriebszustand der Pipettiervorrichtung 1 vielmehr durch die Federeinrichtung vordefiniert und ist vom Benutzer nicht beeinflussbar.

Bei der erfindungsgemäßen Pipettiervorrichtung Hand und der Benutzer aber die Möglichkeit, über das Bedienelement 6 einer Hilfseinrichtung einen zweiten Betriebszustand der Pipettiervorrichtung 1 herbeizuführen. Im zweiten Betriebszustand ist ein Riegelelement (nicht sichtbar) derart an der Pipettiervorrichtung angeordnet, dass sich der Verbindungsabschnitt, hier der Arbeitskonus, nicht mehr an der Feder der Federeinrichtung abstützt sondern an dem Riegelelement. Das Riegelelement ist derart am Grundkörper gelagert, dass es in positiver Achsrichtung gegenüber dem Grundkörper nicht beweglich ist und insbesondere als Widerlager für die Aufsteckkraft dient. Das Riegelelement ist aber in negative Achsrichtung beweglich gegenüber dem Grundkörper angeordnet sein, da es an der Abwurfhülse 4b angebracht ist, die gegenüber dem Oberteil 3 und dem daran befestigten Basisabschnitt 4a des Unterteils in negative Achsrichtung beweglich angeordnet ist. Im zweiten Betriebszustand wird deshalb die Aufsteckkraft durch die Kraft definiert, mit der ein Benutzer die Pipette auf die Pipettenspitze drückt.

Das Bedienelement 6 ist ein um die Achsrichtung A rotierbarer Schieberegler, der vom Benutzer zwischen einer ersten Position und einer zweiten Position verschoben werden kann. In der ersten Position ist das Riegelelement so angeordnet, dass der erste Betriebszustand der Pipette vorliegt und in der zweiten Position ist das Riegelelement so angeordnet, dass der zweite Betriebszustand der Pipette vorliegt. Der Benutzer kann somit wählen, ob er eine vordefinierte Aufsteckkraft nutzen möchte oder ob er die Aufsteckkraft selber definieren möchte.

Fig. 1b zeigt die als mechanische 8-Kanal-Luftpolster-Pipette ausgeführte Pipettiervorrichtung 10. Diese weist einen Grundkörper 12 auf, der aus einem Oberteil 13 und einem Unterteil 14 besteht und einen Bedienknopf 15 aufweist, der eine ähnliche Funktionalität wie der Bedienknopf 5 der Pipette 1 aufweist. Mit dem am Basisabschnitt 14a des Unterteils 14 axial in negative Achsrichtung (-A) beweglich gelagerten Abwurfelement 14b sind bis zu 8 Pipettenspitzen gleichzeitig abwerfbar. Das Oberteil und das Unterteil sind durch einen Verschluss (nicht gezeigt) miteinander verbindbar. Insgesamt bis zu acht Pipettenspitzen sind mit den acht als Arbeitskonen ausgeführten Verbindungsabschnitten 17 verbindbar.

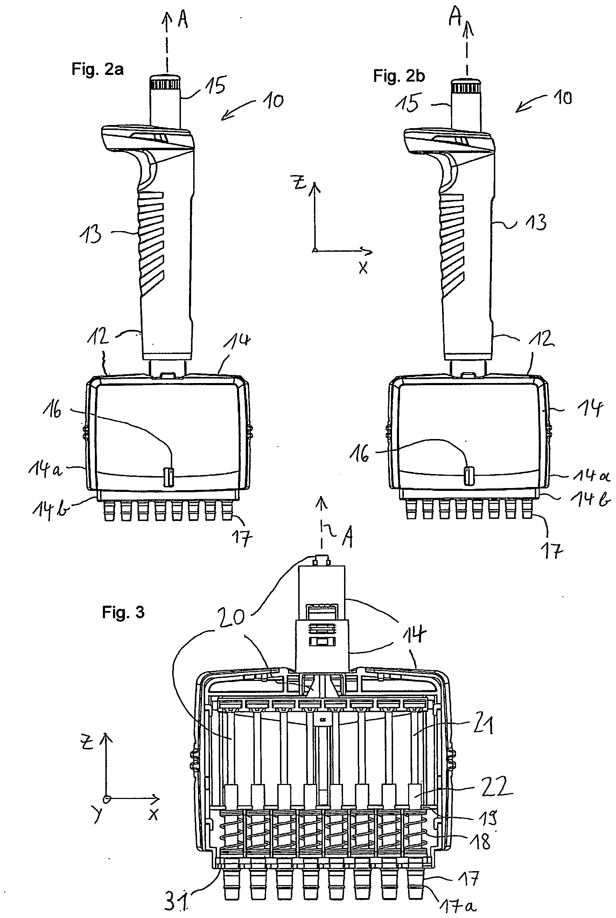

Die 8-Kanal-Pipette weist ein als Schieberegler ausgeführtes Bedienelement 16 auf, das vom Benutzer seitlich, senkrecht zur Achsrichtung A, hier parallel zur x-Achse, zwischen einer ersten Position, die in Fig. 2a gezeigt ist, und einer zweiten Position, die in Fig. 2b gezeigt ist, verschoben werden kann. In der ersten Position ist ein Riegelelement einer Hilfseinrichtung so angeordnet, dass der erste Betriebszustand der 8-Kanal-Pipette vorliegt und in der zweiten Position ist das Riegelelement so angeordnet, dass der zweite Betriebszustand der 8-Kanal-Pipette vorliegt. Der Benutzer kann somit wählen, ob er eine vordefinierte Aufsteckkraft nutzen möchte oder ob er die Aufsteckkraft selber definieren möchte. Die Funktion der Hilfseinrichtung wird anhand der nachfolgenden Figuren weiter erläutert.

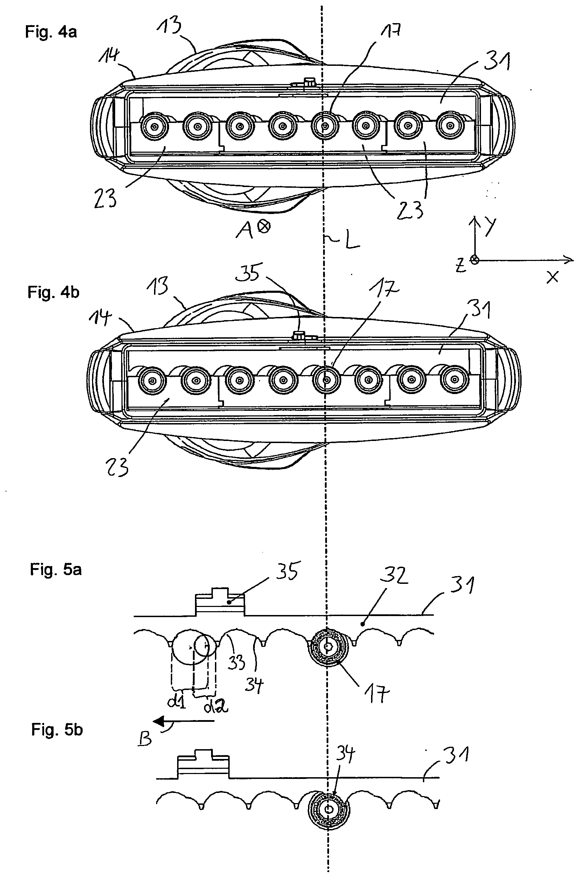

Fig. 3 zeigt eine Vorderansicht des Unterteils 14 der 8-Kanal-Pipette 10, mit abgenommener Vorderwand und abgenommener Bodenplatte. Ein axial bewegliches Kolbenelement 20 weist acht miteinander verbundene Kolbenstangen 21 auf, die jeweils in einen fest am Unterteil 14 gelagerten Zylinderabschnitt 22 eingreifen, um insgesamt mittels acht parallel einsetzbarer Zylinder-Kolben-Einheiten bis zu acht Proben gleichzeitig zu pipettieren. Ein als Arbeitkonus ausgebildeter Verbindungsabschnitt 17 stützt sich im gezeigten ersten Betriebszustand der Pipettiervorrichtung 10 in positiver Achsrichtung jeweils gefedert an einer Schraubenfeder 18 ab, die auf einem fest am Unterteil 14 angeordneten Lager 19 des Unterteils abgestützt ist. Die acht Verbindungsabschnitte und Federn sind unabhängig voneinander bewegbar, so dass eine Anzahl zwischen 1 und 8 Pipettenspitzen an der 8-Kanal-Pipette verwendet werden können. Ein Arbeitskonus 17 weist jeweils einen um die Außenwand des Konus angeordneten elastischen Dichtungsring (O-Ring) auf, der ein dichtes Verbinden von Pipettenspitze und Arbeitskonus-besonders zuverlässig sicherstellt. Beim Aufstecken der Pipettenspitze(n) wird die Aufsteckkraft jeweils automatisch auf den vordefinierten Wert begrenzt, da ein Verbindungsabschnitt mit Pipettenspitze jeweils gegen eine Feder 18 in positive Achsrichtung bewegt wird, bis der obere Rand der Pipettenspitze in Höhe der Unterseite des Riegelelements 31 des Unterteils 14 am Riegelelement anschlägt. Dies erfolgt in gleicher Weise wie beim Aufstecken einer Pipettenspitze auf den Arbeitskonus einer Pipette 1, wie anhand von Fig. 1 beschrieben. Vorliegend befindet sich die Unterseite des Abwerfers 23 (siehe Fig. 4a, 4b) der Mehrkanalpipette auf derselben Höhe wie die Unterseite des Riegelelements 31, so dass beim Aufstecken der Pipettenspitze diese mit ihrem oberen Rand auch am Abwerfer 23 anschlägt, der somit ebenfalls als Anschlagabschnitt dient.

Fig. 4a zeigt eine Unteransicht der 8-Kanal-Pipette 10 im ersten Betriebszustand. Das Riegelelement 31 ist senkrecht zur Achsrichtung A entlang der x-Achse mittels einer Führungseinrichtung beweglich gelagert. Das Riegelelement 31 ist parallel der axialen Richtung A gegenüber dem Unterteil 14 im wesentlichen unbeweglich gelagert. Der Benutzer kann durch den Schieberegler 16 das Riegelelement zwischen der ersten Position, die in Fig. 2a, Fig. 4a und Fig. 5a gezeigt ist, und der zweiten Position, die in Fig. 2b, Fig. 4b und Fig. 5b gezeigt ist, verschieben.

Die Figuren 4a, 4b, 5a und 5b sind jeweils so übereinander angeordnet, dass der Arbeitskonus 17 entlang der x-Achse in der selben Position angeordnet ist, die durch den Schnittpunkt der Linie L mit der x-Achse definiert ist, während das Riegelelement 31 relativ dazu entlang der x-Achse verschoben wird.

In der ersten Position ist die 8-Kanal-Pipette 10 im ersten Betriebszustand und in der zweiten Position ist die 8-Kanal-Pipette 10 im zweiten Betriebszustand. In der ersten Position ist jeder Arbeitskonus 17 zumindest in positiver Achsenrichtung A gegenüber dem Unterteil des Grundkörpers beweglich, in der zweiten Position ist jeder Arbeitskonus 17 in positiver Achsenrichtung A gegenüber dem Unterteil des Grundkörpers vollständig blockiert und unbeweglich.

Diese Blockade und Verriegelung wird erreicht, indem das axial unbewegliche-Riegelelement in der zweiten Position mit einem Vorsprungsabschnitt jeweils in eine Nut eingreift, die in Höhe (entlang z-Achse bzw. A) des Riegelelements 31 jeweils in einem Verbindungsabschnitt 17 ausgebildet ist. Das Riegelelement ist ein flaches Leistenelement mit einem hier quaderförmigen Basiskörper 32. Dieser weist mehrere Paare von in x-Richtung nebeneinander liegenden und sich überschneidenden kreisabschnittförmigen Aussparungen 33, 34 auf, die unterschiedlichen Durchmesser bzw. Radius haben. Die größere Aussparung 33, weist einen Durchmesser d1 auf. Die Aussparung 33 ist so ausgebildet, dass in der ersten Position der Arbeitskonus 17 innerhalb der Aussparung 33 unbehindert beweglich ist. Die kleinere Aussparung 34 weist einen kleineren Durchmesser d2 mit d2 < d1 auf. Der Rand der Aussparung 34 bildet den Vorsprung, der in der zweiten Position zumindest teilweise in eine senkrecht zur Achsrichtung A in den Arbeitskonus eingebrachte Nut eingreifen kann, so dass der Arbeitskonus in dieser zweiten Position in Achsrichtung im wesentlichen spielfrei verriegelt ist. Der Vorsprungsabschnitt weist, ebenso wie das Leistenelement selber eine geringe Höhe h auf, so dass die Hilfseinrichtung in axialer Richtung nur wenig Raum in der Pipette einnimmt. Die Höhe h, oder maximale Höhe h, des Riegelelements oder des Vorsprungsabschnitts kann so gewählt sein, dass vorzugsweise 0,1 mm < h < 3,0 mm.

Das Riegelelement 31 ist über einen Kopplungsabschnitt 35 des Riegelelements mit dem Bedienelement 16 gekoppelt, so dass vorliegend eine vom Benutzer durchgeführte Bedienungsbewegung B des Bedienelements 16 unmittelbar zu derselben Bewegung des Riegelelements 31 führt. Die erste Position und die zweite Position ist jeweils über ein Verrasten des Riegelelements und/oder des Bedienelements am Grundkörper gesichert.

Eine solche Mehrkanal-Pipettiervorrichtung ist besonders komfortabel bedienbar und bietet die volle Flexibilität der Verwendung in beiden Betriebszuständen.

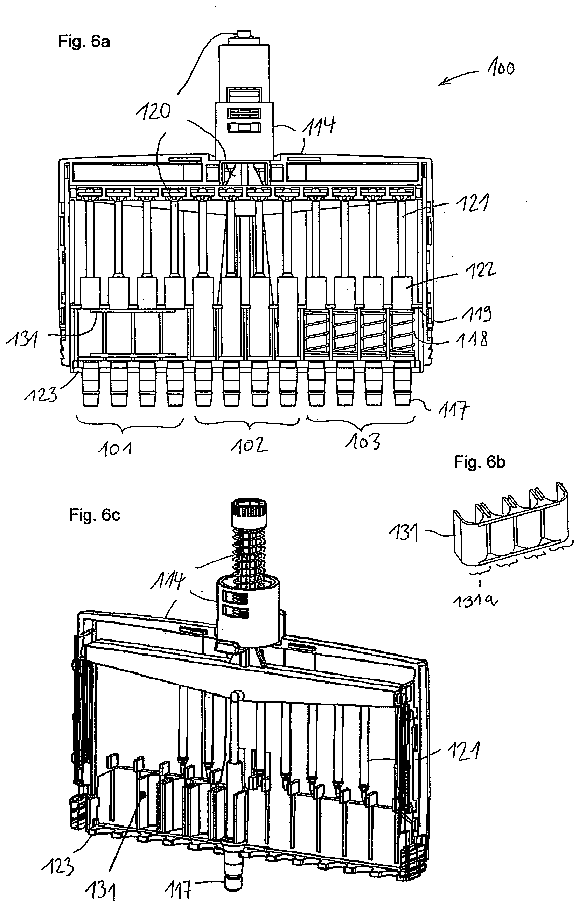

Fig. 6a zeigt eine Vorderansicht des Unterteils 114 einer Mehrkanal-Pipettiervorrichtung 100, die hier nur teilweise gezeigt ist, gemäß der zweiten bevorzugten Ausführungsform der Erfindung, mit abgenommener Vorderwand. Mindestens ein Hilfselement 131 von insgesamt maximal drei Riegelelementen ist in einem ersten Betriebszustand der Mehrkanal-Pipettiervorrichtung 100 nicht deren Bestandteil, sondern ist separat zu dieser angeordnet. Die Mehrkanal-Pipettiervorrichtung 100 ist ähnlich ausgeführt wie die Mehrkanal-Pipettiervorrichtung 10, weist aber insgesamt 12 Pipettierkanäle mit insgesamt 12 Zylinder-Kolben-Einheiten auf.

Das axial bewegliche Kolbenelement 120 weist 12 miteinander verbundene Kolbenstangen 121 auf, die jeweils in einen fest am Unterteil 114 gelagerten Zylinderabschnitt 122 eingreifen, um insgesamt mittels 12 parallel einsetzbarer Zylinder-Kolben-Einheiten bis zu 12 Proben gleichzeitig zu pipettieren. Ein als Arbeitskonus ausgebildeter Verbindungsabschnitt 117 stützt sich im gezeigten ersten Betriebszustand der Pipettiervorrichtung 100 in positiver Achsrichtung jeweils gefedert an einer Schraubenfeder 118 ab, die auf einem fest am Unterteil 114 angeordneten Lager 119 des Unterteils abgestützt ist. Die 12 Verbindungsabschnitte und Federn sind unabhängig voneinander bewegbar, so dass eine Anzahl zwischen 1 und 12 Pipettenspitzen an der 12-Kanal-Pipette verwendet werden können. Ein Arbeitskonus 117 weist jeweils einen um die Außenwand des Konus angeordneten elastischen Dichtungsring (O-Ring) auf, der ein dichtes Verbinden von Pipettenspitze und Arbeitskonus besonders zuverlässig sicherstellt. Beim Aufstecken der Pipettenspitze(n) wird die Aufsteckkraft jeweils automatisch auf den vordefinierten Wert begrenzt, da ein Verbindungsabschnitt mit Pipettenspitze jeweils gegen eine Feder 118 in positive Achsrichtung bewegt wird, bis der obere Rand der Pipettenspitze an einem Anschlagabschnitt 123 des Unterteils 114 anschlägt. Dies erfolgt in gleicher Weise wie beim Aufstecken einer Pipettenspitze auf den Arbeitskonus einer Pipette 1, wie anhand von Fig. 1 beschrieben.

Die Mehrkanal-Pipettiervorrichtung 100 ist derart gestaltet, dass mindestens eine Feder 118, insbesondere eine Mehrzahl Federn 118, vorliegend vier Federn vom Benutzer aus der Mehrkanal-Pipettiervorrichtung 100 entnommen, werden, bevor ein Hilfselement so eingesetzt wird, dass es zumindest teilweise die Position einnimmt, in der zuvor die nun entnommenen Federn 118 angeordnet waren. Ein Hilfselement 131 ist als Distanzelement ausgeführt, das in einem zweiten Betriebszustand der Mehrkanal-Pipettiervorrichtung 100 so an dieser angeordnet ist, dass das Distanzelement sich zumindest in positiver Achsrichtung fest am Grundkörper bzw. Unterteil 114 abstützt, vorliegend am Lager 119, und sich der mindestens eine Verbindungsabschnitt, nämlich vorliegend vier Verbindungsabschnitte, axial im wesentlichen unbeweglich am Distanzelement abstützt.

Vorliegend weist das Distanzelement vorliegend vier Teilabschnitte 131a auf, die jeweils zur Anordnung in der Mehrkanal-Pipettiervorrichtung 100 anstelle einer Feder 118 ausgebildet sind. Das Distanzelement kann generell dieselbe Anzahl von Teilabschnitten aufweisen, wie Verbindungsabschnitte vorgesehen sind, vorliegend also bis zu 12 Teilabschnitte, oder weniger Teilabschnitte, insbesondere nur einen Teilabschnitt oder nur zwei Teilabschnitte. Der Benutzer kann so auswählen, ob er alle Verbindungsabschnitte in den zweiten Betriebszustand versetzen möchte, insbesondere blockieren möchte, oder nur einen Teil davon.

In Fig. 6a sind die vier Verbindungsabschnitte, die der Gruppe 101 von Verbindungsabschnitten zugeordnet sind, von einem Distanzelement 131 axial blockiert, entsprechend einem zweiten Betriebszustand. Bei der Gruppe 102 von Verbindungsabschnitten sind die Verbindungsabschnitte axial frei beweglich, da die vier Federn 118 jeweils entnommen wurden, was zur Folge hat, dass sich die Verbindungsabschnitte in positiver Achsrichtung nicht abstützen können und insofern nicht betriebsbereit sind. Bei der Gruppe 103 von Verbindungsabschnitten sind die Verbindungsabschnitte axial gefedert gelagert und beweglich, entsprechend einem ersten Betriebszustand.

Die Mehrkanal-Pipettiervorrichtung 100 entsprechend der zweiten bevorzugten Ausführungsform der Erfindung bietet sich insbesondere für Benutzer an, die eine Mehrkanal-Pipettiervorrichtung mit gefedert gelagerten, beweglichen Verbindungsabschnitten unkompliziert in eine Mehrkanal-Pipettiervorrichtung mit zumindest teilweise axial unbeweglich gelagerten Verbindungsabschnitten umwandeln wollen, da sie den ersten Betriebszustand zumindest teilweise und zeitweise nicht verwenden wollen.

## Patentansprüche

1. Pipettiervorrichtung (1; 10; 100), zum Pipettieren mindestens einer fluiden Laborprobe in mindestens einen Pipettierbehälter (9), aufweisend
- einen sich entlang einer Achsrichtung (A) erstreckenden Grundkörper (2; 12),
- mindestens einen Verbindungsabschnitt (17; 117), mit dem mindestens ein Pipettierbehälter durch eine zumindest teilweise axiale Verbindungbewegung entlang der positiven Achsrichtung (A) verbindbar ist, wobei der mindestens eine Verbindungsabschnitt zumindest parallel zur Achsrichtung (A) beweglich mit dem Grundkörper (2; 12) verbunden ist,
- eine Federeinrichtung (18; 118), durch die der mindestens eine Verbindungsabschnitt zumindest in einem ersten Betriebszustand der Pipettiervorrichtung am Grundkörper (2; 12) gefedert abgestützt ist, so dass der mindestens eine Verbindungsabschnitt (17; 117) während der Verbindungsbewegung eine gefederte Ausweichbewegung entlang der positiven Achsrichtung (A) durchführen kann,
wobei an der Pipettiervorrichtung eine Hilfseinrichtung (16, 31; 131) vorgesehen ist, die dazu ausgebildet ist, in zumindest einem zweiten Betriebszustand der Pipettiervorrichtung auf die Ausweichbewegung des mindestens einen Verbindungsabschnitts (17; 117) einzuwirken,
wobei die Pipettiervorrichtung dazu ausgebildet ist, um vom Benutzer wahlweise in den ersten Betriebszustand oder den zweiten Betriebszustand versetzt zu werden,
**dadurch gekennzeichnet, dass**
die Hilfseinrichtung als Verriegelungseinrichtung ausgebildet ist, mittels der die Ausweichbewegung im zweiten Betriebszustand vollständig blockiert wird.

2. Pipettiervorrichtung nach Anspruch 1, wobei die Hilfseinrichtung mindestens ein Hilfselement (31; 131) aufweist, das beweglich an der Pipettiervorrichtung angeordnet ist, so dass es vom Benutzer zumindest zwischen einer ersten Position und einer zweiten Position an der Pipettiervorrichtung durch eine Hilfsbewegung bewegbar ist, wobei in der ersten Position sich die Pipettiervorrichtung im ersten Betriebszustand befindet, und wobei in der zweiten Position sich die Pipettiervorrichtung im zweiten Betriebszustand befindet.

3. Pipettiervorrichtung nach Anspruch 2, wobei die Hilfsbewegung zumindest teilweise senkrecht zur Achsrichtung gerichtet ist.

4. Pipettiervorrichtung nach Anspruch 2 oder 3, wobei das mindestens eine Hilfselement beweglich am Grundkörper gelagert ist.

5. Pipettiervorrichtung gemäß Anspruch 2, 3 oder 4, die eine elektrische Antriebseinrichtung aufweist, um die Hilfsbewegung durchzuführen.

6. Pipettiervorrichtung gemäß einem der Ansprüche 2 bis 5, die eine elektrische Steuereinrichtung aufweist, um die Hilfsbewegung zumindest teilweise oder vollständig elektrisch zu steuern.

7. Pipettiervorrichtung nach Anspruch 2, wobei das Hilfselement ein Riegelelement (31; 131) ist.

8. Pipettiervorrichtung nach Anspruch 7, wobei der mindestens eine Verbindungsabschnitt mindestens einen ersten Eingriffsabschnitt aufweist und das Riegelelement mindestens einen zweiten Eingriffsabschnitt aufweist, wobei im ersten Betriebszustands der mindestens eine erste Eingriffsabschnitt und der mindestens eine zweite Eingriffsabschnitt nicht ineinander eingreifen und im zweiten Betriebszustands der mindestens eine erste Eingriffsabschnitt und der mindestens eine zweite Eingriffsabschnitt ineinander eingreifen und in einer Verriegelungsposition angeordnet sind.

9. Pipettiervorrichtung nach Anspruch 8, wobei der mindestens eine erste Eingriffsabschnitt ein Vertiefungsabschnitt des Verbindungsabschnitts ist und der mindestens eine zweite Eingriffsabschnitt ein Vorsprungsabschnitt des Riegelelementes ist.

10. Pipettiervorrichtung nach mindestens einem der vorherigen Ansprüche, die als Mehrkanal-Pipettiervorrichtung (10; 100) ausgebildet ist.

11. Pipettiervorrichtung (100) gemäß Anspruch 10, wobei
die Hilfseinrichtung (131) derart ausgebildet ist, dass sie zumindest teilweise vom Grundkörper (12) separierbar ist,
wobei die Hilfseinrichtung im ersten Betriebszustand zumindest teilweise von der Pipettiervorrichtung separiert ist und im zweiten Betriebszustand nicht von der Pipettiervorrichtung separiert ist.

12. Verwendung der Pipettiervorrichtung nach einem der Ansprüche 1 bis 11 in einem medizinischen, biologischen, biochemischen und/oder chemischen Laboratorium.

## Claims

1. Pipetting device (1; 10; 100) for pipetting at least one fluid laboratory sample into at least one pipetting vessel (9), said pipetting device having:
- a main body (2; 12) extending along an axis direction (A);
- at least one connecting section (17; 117), configured to be connected to at least one pipetting vessel by an at least partially axial connecting movement along the positive axis direction (A); wherein the at least one connecting section is connected to the main body (2; 12) so as to be movable at least parallel to the axis direction (A);
- a spring mechanism (18; 118), by which the at least one connecting section is supported with spring loading on the main body (2; 12) at least in a first operating state of the pipetting device, such that the at least one connecting section (17; 117), during the connecting movement, can perform a spring-assisted deflection movement along the positive axis direction (a),
wherein an auxiliary mechanism (16, 31; 131) is provided on the pipetting device and configured to act on the deflection movement of the at least one connecting section in at least a second operating state of the pipetting device;
wherein the pipetting device is configured such that a user can alternately put the pipetting device into the first operating state or the second operating state.
**characterized in that**
wherein the auxiliary mechanism is configured to be a locking mechanism, by means of which the deflection movement is blocked completely in the second operating state.

2. Pipetting device according to Claim 1, wherein the auxiliary mechanism has at least one auxiliary element (31; 131), which is arranged movably on the pipetting device such that it can be moved by the user at least between a first position and a second position on the pipetting device by an auxiliary movement, wherein the pipetting device is located in the first operating state in the first position, and wherein the pipetting device is located in the second operating state in the second position.

3. Pipetting device according to Claim 2, wherein the auxiliary movement is directed at least partially perpendicularly with respect to the axis direction.

4. Pipetting device according to Claim 2 or 3, wherein the at least one auxiliary element is mounted movably on the main body.

5. Pipetting device according to Claim 2, 3 or 4, having an electrical drive mechanism in order to perform the auxiliary movement.

6. Pipetting device according to Claims 2, having an electrical control mechanism in order to control the auxiliary movement at least partially or completely electrically.

7. Pipetting device according to one of the Claims 2 to 5, wherein the auxiliary element is a bolt element (31; 131).

8. Pipetting device according to Claim 7, wherein the at least one connecting section has at least one first engaging section and the bolt element has at least one second engaging section, wherein the at least one first engaging section and the at least one second engaging section do not engage in each other in the first operating state, and the at least one first engaging section and the at least one second engaging section do engage in each other in the second operating state and are arranged in a locking position.

9. Pipetting device according to Claim 8, wherein the at least one first engaging section is a recessed section of the connecting section, and the at least one second engaging section is a projecting section of the bolt element.

10. Pipetting device according to at least one of the previous claims, which is configured to be a multi-channel pipetting device (10; 100).

11. Pipetting device (100) according to claim 10, wherein
the auxiliary mechanism (131) is configured to be at least partially separable from the main body (12) and
wherein the auxiliary mechanism, in the first operating state, is separated at least partially from the pipetting device and, in the second operating state, is not separated from the pipetting device.

12. Use of the pipetting device according to one of the Claims 1 to 11 in a medical, biological, biochemical and/or chemical laboratory.

## Revendications

1. Dispositif de pipetage (1 ; 10 ; 100), pour le pipetage d'au moins un échantillon fluide de laboratoire dans au moins un contenant de pipetage (9), comprenant
- un corps de base (2 ; 12) s'étendant le long d'une direction axiale (A),
- au moins une partie de liaison (17 ; 117), à laquelle au moins un contenant de pipetage peut être relié à la suite d'un mouvement de liaison au moins en partie axial le long de la direction axiale (A) positive, dans lequel la au moins une partie de liaison est reliée de manière mobile au corps de base (2 ; 12) au moins parallèlement à la direction axiale (A),
- un dispositif à ressort (18 ; 118), par l'intermédiaire duquel la au moins une partie de liaison peut être en appui élastique sur le corps de base (2 ; 12) au moins dans un premier état de fonctionnement du dispositif de pipetage, de telle sorte que la au moins une partie de liaison (17 ; 117) peut effectuer un mouvement d'écartement élastique le long de la direction axiale (A) positive pendant le mouvement de liaison,
dans lequel un dispositif auxiliaire (16, 31 ; 131) est prévu sur le dispositif de pipetage, et est conçu pour agir sur le mouvement d'écartement de la au moins une partie de liaison (17 ; 117) dans au moins un deuxième état de fonctionnement du dispositif de pipetage,
dans lequel le dispositif de pipetage est conçu pour être amené par l'utilisateur sélectivement dans le premier état de fonctionnement ou le deuxième état de fonctionnement,
**caractérisé en ce que**
le dispositif auxiliaire est réalisé sous la forme d'un dispositif de verrouillage, au moyen duquel le mouvement d'écartement est complètement empêché dans le deuxième état de fonctionnement.

2. Dispositif de pipetage selon la revendication 1, dans lequel le dispositif auxiliaire présente au moins un élément auxiliaire (31 ; 131), qui est monté mobile sur le dispositif de pipetage de manière à pouvoir être déplacé par l'utilisateur au moins entre une première position et une deuxième position sur le dispositif de pipetage à la suite d'un mouvement auxiliaire, dans lequel, dans la première position, le dispositif de pipetage se situe dans le premier état de fonctionnement, et dans lequel, dans la deuxième position, le dispositif de pipetage se situe dans le deuxième état de fonctionnement.

3. Dispositif de pipetage selon la revendication 2, dans lequel le dispositif auxiliaire est orienté au moins en partie perpendiculairement à la direction axiale.

4. Dispositif de pipetage selon la revendication 2 ou 3, dans lequel le au moins un élément auxiliaire est monté mobile sur le corps de base.

5. Dispositif de pipetage selon la revendication 2, 3 ou 4, qui présente un système d'entraînement électrique afin de réaliser le mouvement auxiliaire.

6. Dispositif de pipetage selon l'une quelconque des revendications 2 à 5, qui présente un système de commande électrique afin de commander le mouvement auxiliaire de façon au moins en partie électrique ou complètement électrique.

7. Dispositif de pipetage selon la revendication 2, dans lequel l'élément auxiliaire est un élément de verrouillage (31 ; 131).

8. Dispositif de pipetage selon la revendication 7, dans lequel la au moins une partie de liaison présente au moins une première partie de contact et l'élément de verrouillage présente au moins une deuxième partie de contact, dans lequel, dans le premier état de fonctionnement, la au moins une première partie de contact et la au moins une deuxième partie de contact ne sont pas insérées l'une dans l'autre et, dans le deuxième état de fonctionnement, la au moins une première partie de contact et la au moins une deuxième partie de contact sont insérées l'une dans l'autre et sont agencées dans une position de verrouillage.

9. Dispositif de pipetage selon la revendication 8, dans lequel la au moins une première partie de contact est une partie évidée de la partie de liaison et la au moins une deuxième partie de contact est une partie saillante de l'élément de verrouillage.

10. Dispositif de pipetage selon au moins l'une des revendications précédentes, qui est réalisé sous la forme d'un dispositif de pipetage à plusieurs conduits (10 ; 100).

11. Dispositif de pipetage (100) selon la revendication 10, dans lequel
le dispositif auxiliaire (131) est conçu de manière à pouvoir être séparé au moins en partie du corps de base (12),
dans lequel le dispositif auxiliaire, dans le premier état de fonctionnement, est séparé au moins en partie du dispositif de pipetage et, dans le deuxième état de fonctionnement, n'est pas séparé du dispositif de pipetage.

12. Utilisation du dispositif de pipetage selon l'une quelconque des revendications 1 à 11 dans un laboratoire de médecine, de biologie, de biochimie et/ou de chimie.
